# EUROPÄISCHE PATENTSCHRIFT

(11) **EP 3 290 097 B1**
(45) Veröffentlichungstag und Bekanntmachung des Hinweises auf die Patenterteilung: **23.02.2022**
(21) Anmeldenummer: 17184606.6
(22) Anmeldetag: 03.08.2017
(51) Int. Cl.: B01D 35/14, B01D 46/00, B01D 46/42

(54) **BETRIEBSVERFAHREN FÜR EIN FILTERSYSTEM**
OPERATING METHOD FOR A FILTER SYSTEM
PROCÉDÉ DE FONCTIONNEMENT D'UN SYSTÈME DE FILTRE

(30) Priorität: 30.08.2016 DE 102016010394
(43) Veröffentlichungstag der Anmeldung: 07.03.2018
(73) Patentinhaber: MANN+HUMMEL GmbH, 71636 Ludwigsburg (DE)
(72) Erfinder: FRANZ, Andreas, 71638 Ludwigsburg (DE)
(74) Vertreter: Mann + Hummel Intellectual Property

(56) Entgegenhaltungen:
- WO-A1-2014/168875
- WO-A1-2016/073674
- DE-A1- 10 151 270
- US-A- 5 674 381
- US-A1- 2011 220 560
- US-A1- 2013 015 109
- US-A1- 2013 180 898

## Beschreibung

### Technisches Gebiet

Die Erfindung betrifft ein Betriebsverfahren für ein Filtersystem, insbesondere eines Kraftfahrzeugs, wobei das Filtersystem folgendes umfasst:
- ein Filterelement für einen Fluidfilter, wobei das Filterelement ein Funkidentifikationsmittel aufweist,
- ein Filtergehäuse des Fluidfilters, in dem das Filterelement austauschbar anordenbar ist, und das ein Lesegerät für das Funkidentifikationsmittel aufweist,
- eine Auswerteeinheit sowie eine Speichereinheit.

### Stand der Technik

Aus der EP 1 985 351 A1 ist eine Filtereinrichtung zum Einsatz in einem Kraftfahrzeug mit einem Filterelement und einem Filtergehäuse bekannt geworden. Das Filterelement ist mit einem RFID-Chip ausgestattet und ein Lesegerät zum Auslesen des RFID-Chips ist in dem Filtergehäuse angeordnet, um eine Überprüfung und Identifizierung des Filtereinsatzes im eingebauten Zustand zu ermöglichen.

Die DE 10 2010 044 258 B4 offenbart eine Filtereinrichtung umfassend ein Filterelement mit einem RFID-Chip zum Einsetzen in ein Gehäuse mit einem Kontaktierungsbauteil. Im eingebauten Zustand des Filterelements in dem Gehäuse kommuniziert das Kontaktierungsbauteil mit dem RFID-Chip. Dadurch kann festgestellt werden, ob überhaupt ein Filterelement und/oder das richtige Filterelement eingesetzt ist. Auch US5674381, DE10151270, US2013/180898 und US2013/015109 sind relevanter Stand der Technik.

Die vorstehend beschriebenen Filtereinrichtungen bieten keinen hinreichenden Schutz vor dem Einsatz von für die Filtereinrichtung nicht freigegebenen Filterelementen, etwa gefälschten Filterelementen oder Filterelementen eines Fremdherstellers mit ggf. nicht ausreichender Filterleistung. Die Überprüfung des Filterelements kann im Stand der Technik ausgehebelt werden, indem RFID-Chips aus Original-Filterelementen ausgebaut und wiederverwendet werden, oder indem von Original-Chips ausgelesene Daten auf einem RFID-Chip eines Nachbau-Filterelements in identischer Form, aber womöglich nur geringer Qualität bereitgestellt werden. Dies birgt insbesondere bei kritischen Anwendungen des Filtersystems Gefahren.

Es ist daher eine Aufgabe der Erfindung, ein Betriebsverfahren für ein anzugeben, mit dem zuverlässig sichergestellt werden kann, dass nur für das Filtersystem vorgesehene, geeignete Filterelemente verwendet werden.

### Ausführungsformen der Erfindung

Die erfindungsgemäße Aufgabe wird durch ein Betriebsverfahren mit den in Anspruch 1 angegebenen Merkmalen gelöst. Bevorzugte Weiterbildungen der Erfindung sind in der Beschreibung sowie in den Unteransprüchen angegeben.

Das erfindungsgemäße Betriebsverfahren eignet sich insbesondere für das Filtersystem eines Kraftfahrzeugs, eines Luftfahrzeugs oder auch eines Schiffs. Das Filtersystem dient zum Filtern eines Fluids, beispielsweise Kraftstoff, Öl, Wasser oder Luft. Das Filtersystem umfasst ein Filterelement für einen Fluidfilter des Filtersystems. Das Filterelement wird in einer Verpackung bereitgestellt. Die Verpackung ist mit ersten Daten über das Filterelement versehen. Die ersten Daten der Verpackung können auf/an der Verpackung selbst oder auf/in einer Verpackungsbeilage bereitgestellt sein, beispielsweise aufgedruckt oder in einem elektronischen Speichermedium gespeichert sein. Das Filterelement weist ein Funkidentifikationsmittel mit zweiten Daten über das Filterelement auf. Die ersten und zweiten Daten können ganz oder teilweise identisch sein. Die ersten und zweiten Daten können Informationen zu dem Filterelement in kodierter Form enthalten. Insbesondere können für die ersten und zweiten Daten unterschiedliche Kodierungen für dieselben Informationen verwendet werden.

Die ersten und/oder zweiten Daten können insbesondere eine, bevorzugt individuelle, Seriennummer, eine Typenbezeichnung, ein Herstelldatum, ein Verfallsdatum, eine maximale Betriebszeit des Filterelements und/oder Daten zur Identifikation von Fahrzeugen, bei denen das Filterelement eigesetzt werden darf, enthalten. Das Filtersystem umfasst ferner ein Filtergehäuse des Fluidfilters. In dem Filtergehäuse ist das Filterelement austauschbar anordenbar. Das Filtergehäuse weist ein Lesegerät für das Funkidentifikationsmittel auf. Mit dem Lesegerät können die zweiten Daten des Funkidentifikationsmittels ausgelesen werden, wenn das Filterelement in dem Filtergehäuse eingebaut ist. Das Filtersystem umfasst weiterhin eine Auswerteeinheit sowie eine Speichereinheit. Die Speichereinheit und die Auswerteeinheit können als eine gemeinsame Einheit oder separat voneinander vorgesehen sein. Bei dem erfindungsgemäßen Betriebsverfahren erfolgt in einem Schritt a) ein Einsetzen des Filterelements in das Filtergehäuse. In dem Schritt a) erfolgt weiterhin ein Einlesen der ersten Daten von der Verpackung des Filterelements in die Speichereinheit. In der Speichereinheit wird dadurch insbesondere hinterlegt, welches Filterelement (identifizierbar beispielsweise über eine Seriennummer) in dem Filtergehäuse eingebaut sein soll. In einem Schritt b) erfolgt ein Auslesen der zweiten Daten des Funkidentifikationsmittels mit dem Lesegerät. Die ausgelesenen zweiten Daten können ebenfalls in der Speichereinheit abgelegt werden. Sodann werden in einem Schritt c) die ersten und zweiten Daten in der Auswerteeinheit verglichen. In dem Schritt c) erfolgt ferner ein Ausgeben eines Warnhinweises und/oder Verhindern eines Betriebs des Fluidfilters, wenn der Vergleich ergeben hat, dass die zweiten Daten des Funkidentifikationsmittels und die ersten Daten von der Verpackung nicht in einer vorgegebenen Weise übereinstimmen.

Die Schritte b) und c) werden zumindest einmal nach Schritt a) durchgeführt, insbesondere unmittelbar nach Schritt a). Vorzugsweise werden sie mehrfach wiederholt, um zu überprüfen, ob zwischenzeitlich ein anderes Filterelement eingebaut wurde. Bei dem Vergleich kann überprüft werden, ob die ersten und zweiten Daten identisch übereinstimmen, d.h. ob die ersten und zweiten Daten beispielsweise dieselbe Seriennummer des Filterelements enthalten. Eine Übereinstimmung kann auch in einer anderen vorgegeben Weise festgestellt werden, ohne dass die Daten identisch übereinstimmen. Beispielsweise kann in den ersten Daten hinterlegt sein, dass das Filterelement aus einer bestimmten Produktionscharge stammen muss oder in einem bestimmten Zeitraum hergestellt worden sein muss. Entsprechende Informationen, sind dann in den zweiten Daten enthalten oder können aus diesen ermittelt werden. Produktionscharge und Herstelldatum können etwa aus der Seriennummer des Filterelements rekonstruierbar sein.

Der Warnhinweis wird typischerweise direkt in/an dem mit dem Filtersystem versehenen Kraftfahrzeug ausgegeben. Die Ausgabe des Warnhinweises kann auch an einer zentralen Stelle, etwa in einer Werkstatt oder bei einem Hersteller des Filtersystems oder des Kraftfahrzeugs mit dem Filtersystem erfolgen. Das Vergleichsergebnis von Schritt c) kann dazu in an und für sich bekannter Weise übermittelt (z.B. mittels Telemetrie) und/oder gespeichert (z.B. in einem Fehlerspeicher des Kraftfahrzeugs) werden. Durch den Vergleich der ersten und zweiten Daten wird sichergestellt, dass nicht Funkidentifikationsmittel aus bereits benutzten Filterelementen wiederverwertet werden, oder dass von originalen Funkidentifikationsmitteln ausgelesene Daten auf einem Funkidentifikationsmittel eines Nachbau-Filterelements in identischer Form bereitgestellt werden. Erfindungsgemäß ist nämlich erforderlich, dass auch entsprechende erste Daten bereitgestellt werden. Dadurch wird der Logistikaufwand für einen (unerlaubten) Nachbau des Filterelements erheblich erhöht. Erste und/oder zweite Daten können einen für jedes Filterelement individuellen Schlüssel zur Entschlüsselung verschlüsselt abgelegter zweiter bzw. erster Daten enthalten. Um die zweiten Daten des Funkidentifikationsmittels des Filterelements zu entschlüsseln, ist dann der in den ersten Daten der Verpackung enthaltene Schlüssel erforderlich, und/oder umgekehrt. Dadurch kann ein Umgehen (Überlisten) des Vergleichs in Schritt c) noch zuverlässiger verhindert werden.

Vorzugsweise werden die Schritte b) und c) nach einem Starten, bevorzugt jedes Mal nach dem Starten, eines Kraftfahrzeugs mit dem Filtersystem durchgeführt. Dadurch wird sichergestellt, dass der Vergleich wiederholt während der Nutzungsdauer des Filterelements durchgeführt wird. Es kann erkannt werden, ob ein originales Filterelement nach einiger Zeit durch ein Nachbau-Filterelement erstsetzt wurde, dessen zweite Daten nicht in der vorgegebenen Weise mit den ersten Daten der Verpackung übereinstimmen. Unter dem Starten des Kraftfahrzeugs wird insbesondere ein Einschalten der Zündung und ein sogenanntes "Booten" (= Hochfahren) eines Steuergeräts verstanden. Bevorzugt werden die Schritte b) und c) durchgeführt, noch bevor ein Verbrennungsmotor anspringt oder kurz (wenige Sekunden) danach.

Vorteilhaft werden die Schritte b) und c) jedes Mal durchgeführt, wenn das Filtergehäuse geöffnet und geschlossen wurde. Ein Austausch des Filterelements kann dadurch sicher erkannt werden. Es kann vorgesehen sein, dass nach dem Öffnen und Schließen des Filtergehäuses auch erste Daten von der Verpackung eingelesen werden müssen. Das Filtergehäuse kann zum Erkennen des Öffnens und Schließens Sensoren aufweisen. Vorzugsweise wird das Öffnen und Schließen der Auswerteeinheit oder einem Steuergerät mitgeteilt, woraufhin eine automatische Durchführung der Schritte b) und c) erfolgt.

In dem vorstehend erläuterten Schritt c) kann auch überprüft werden, ob ein Verfallsdatum des Filterelements überschritten ist. Wenn dies der Fall ist, wird ein Warnhinweis ausgegeben und/oder der (weitere) Betrieb des Fluidfilters verhindert. Dadurch kann das Einhalten von Wechselintervallen für das Filterelement erzwungen werden. Das Verfallsdatum kann ausgehend von einem Herstelldatum bestimmt oder vorgegeben werden. Das Verfallsdatum kann nach der Erfindung auch ausgehend vom Zeitpunkt einer Erstinbetriebnahme, der über Schritt a) ermittelt werden kann, mit einer maximalen Betriebszeit des Filterelements bestimmt werden. Herstelldatum und/oder maximale Betriebszeit können in den ersten und/oder zweiten Daten enthalten sein. Ein aktueller Zeitpunkt kann in an sich bekannter Weise zur Verfügung gestellt werden, z.B. in einem Steuergerät eines Kraftfahrzeugs mit dem Filtersystem oder über Radiosignale/Funksignale.

Nach der Erfindung kann das Filtersystem auch eine zentrale Datenbank umfassen. In der Datenbank können dritte Daten über das Filterelement gespeichert sein. In dem Schritt b) werden weiterhin die dritten Daten über das Filterelement aus der zentralen Datenbank abgerufen und/oder es werden die zweiten Daten an die zentrale Datenbank übermittelt. Typischerweise werden die dritten Daten in dem Schritt c) mit den ersten und/oder zweiten Daten verglichen. Dies erlaubt, weitere Informationen für den Vergleich in Schritt c) heranzuziehen. Die dritten Daten können Informationen enthalten, die den zweiten Daten eindeutig zuordenbar sind, beispielsweise ein vorbestimmtes Verfallsdatum für alle Filterelemente einer bestimmten Produktionscharge. Die Menge (Speicherbedarf) der zweiten Daten kann dadurch reduziert werden. In dem Schritt a) können die ersten Daten an die zentrale Datenbank übermittelt werden. Wenn die zweiten Daten an die Datenbank übermittelt werden, können dort weitere Überprüfungen oder Auswertungen durchgeführt werden. Die zentrale Datenbank ist außerhalb des Fahrzeugs eingerichtet, typischerweise für eine Vielzahl von Kraftfahrzeugen desselben Herstellers oder mit Filtersystemen gleichen Typs. Es versteht sich, dass die Datenbank vorzugsweise in Form einer auf einem Computer, insbesondere einem Server, installierten Software bzw. Datenbankanwendung vorliegen kann.

Besonders bevorzugt ist das Funkidentifikationsmittel ein RFID-Tag (RFID-Chip). In einem RFID-Tag kann eine ausreichende Menge zweiter Daten gespeichert werden. Weiter benötigt ein RFID-Tag keine eigene Energieversorgung. Ein Auslesen mit dem Lesegerät kann berührungslos erfolgen.

Das Funkidentifikationsmittel kann an oder in einem Filtermedium des Filterelements, insbesondere innerhalb des Filtermediums, angeordnet sein. Alternativ kann das Funkidentifikationsmittel an oder in einer Endscheibe des Filterelements oder einem Dichtungselement des Filterelements angeordnet sein. Insbesondere kann das Funkidentifikationsmittel in die Endscheibe oder das Dichtungselement eingebettet, darin vergossen, davon umspritzt oder darin eingespritzt sein.

Nach der Erfindung können die Auswerteeinheit und/oder die Speichereinheit in dem Lesegerät ausgebildet sind. Das Lesegerät umfasst dann typischerweise eine CPU mit einer Programmierung als Auswerteeinheit und einen Speicherbereich, der als die Speichereinheit dient. Die Speichereinheit kann in jeder bekannten Form, beispielsweise als Halbleiterlaufwerk (SSD = solid state disc), ausgebildet sein.

Die Auswerteeinheit und/oder die Speichereinheit können in einem Steuergerät des Kraftfahrzeugs ausgebildet sein. Das Steuergerät umfasst typischerweise bereits eine CPU und einen Speicherbereich, die erfindungsgemäß entsprechend eingerichtet werden/sein können.

Die ersten Daten der Verpackung des Filterelements können in einem weiteren Funkidentifikationsmittel, insbesondere einem weiteren RFID-Tag, einem Barcode oder einem Smartcode hinterlegt sein. Das Filtersystem umfasst eine geeignete Leseeinrichtung oder eine solche kann mit dem Filtersystem verbunden werden. Ein weiteres Funkidentifikationsmittel kann insbesondere mittels des vorhandenen Lesegeräts an dem Filtergehäuse ausgelesen werden.

Die vorliegende Erfindung kann mit einem Filtersystem, insbesondere für ein Kraftfahrzeug betrieben werden Das Filtersystem, welches selbst nicht erfindungsgemäß ist, umfasst ein Filterelement für einen Fluidfilter, wobei das Filterelement ein Funkidentifikationsmittel mit zweiten Daten über das Filterelement aufweist. Das Filtersystem umfasst ferner ein Filtergehäuse des Fluidfilters, in dem das Filterelement austauschbar anordenbar ist, und das ein Lesegerät für das Funkidentifikationsmittel aufweist. Mithin können die zweiten Daten des Funkidentifikationsmittels mit dem Lesegerät ausgelesen werden, wenn das Filterelement in das Filtergehäuse eingesetzt ist. Weiterhin umfasst das Filtersystem eine zentrale Datenbank, in der dritte Daten über das Filterelement gespeichert sind. Das Filtersystem umfasst schließlich eine Auswerteeinheit, die dazu eingerichtet ist, die dritten Daten über das Filterelement aus der Datenbank abzurufen und mit den von dem Lesegerät erhaltenen zweiten Daten über das Filterelement zu vergleichen. Über den Vergleich kann festgestellt werden, ob die zweiten und dritten Daten in einer vorbestimmten Weise übereinstimmen. Dadurch kann ein Betrieb des Filtersystems mit einem ungeeigneten/nicht zugelassenen oder überalterten Filterelement erkannt werden. Insbesondere können in der Datenbank Informationen zu zulässigen Typen von Filterelementen für das Kraftfahrzeug hinterlegt sein. Vorzugsweise ist die Auswerteeinheit weiterhin dazu eingerichtet, einen Warnhinweis auszugeben und/oder einen Betrieb des Fluidfilters zu verhindern, wenn der Vergleich ergeben hat, dass die zweiten Daten des Funkidentifikationsmittels und die dritten Daten aus der Datenbank nicht in einer vorgegebenen Weise übereinstimmen. Um die dritten Daten aus der Datenbank abzurufen, kann die Auswerteeinheit Informationen betreffend das Filterelement, das Filtersystem und/oder das Kraftfahrzeug mit dem Filtersystem an die Datenbank übermitteln. Die zentrale Datenbank ist außerhalb des Fahrzeugs eingerichtet, typischerweise für eine Vielzahl von Fahrzeugen desselben Herstellers oder mit Filtersystemen gleichen Typs. Das Filtersystem kann mit einem erfindungsgemäßen Betriebsverfahren betrieben werden.

Das Filtersystem kann ferner eine Speichereinheit umfassen, in der Daten zu dem Filterelement hinterlegbar sind. Die Daten in der Speichereinheit können zuvor aus der Datenbank abgerufen worden sein und/oder den Betrieb des Filterelements betreffen, beispielsweise einen Zeitpunkt des Einbaus oder eine Betriebszeit. Die Daten aus der Speichereinheit können beim Vergleichen der zweiten und dritten Daten berücksichtigt werden.

Vorzugsweise ist die Auswerteeinheit weiterhin dazu eingerichtet, Daten über das Filterelement an die Datenbank zu übertragen. Dies erlaubt, zusätzliche Überprüfungen oder Auswertungen durchzuführen. Die an die Datenbank übertragenen Daten können Informationen zum Betrieb des Filterelements enthalten, beispielsweise einen Zeitpunkt des Einbaus oder eine Betriebszeit. Die übertragenen Daten können auch die zweiten Daten des Funkidentifikationsmittels ganz oder teilweise enthalten.

Die Erfindung wird nachstehend anhand von in der Zeichnung wiedergegebenen Ausführungsbeispielen näher erläutert.

In der Zeichnung zeigen:
- Fig. 1a: ein erfindungsgemäßes Filtersystem mit einem Filtergehäuse und einem Filterelement in einer Verpackung in einer stark schematischen Darstellung;
- Fig. 1b: das Filtersystem von Fig. 1a, wobei das Filterelement in das Filtergehäuse eingesetzt ist;
- Fig. 2: einen schematischen Ablaufplan eines Betriebsverfahrens nach der Erfindung;
- Fig. 3: verschiedene Möglichkeiten zur Anordnung eines Funkidentifikationsmittels an dem Filterelement im Rahmen der Erfindung in einer stark abstrahierten Darstellung;
- Fig. 4: ein Kraftfahrzeug mit einem Filtersystem nach der Erfindung.

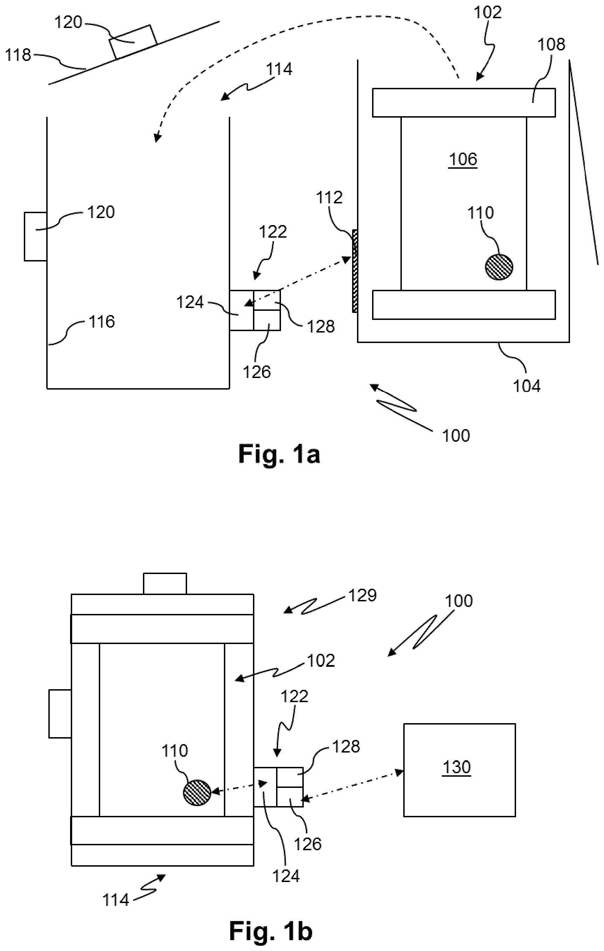

In **Fig. 1a** ist ein Filtersystem **100** nach der Erfindung stark schematisch dargestellt. Das Filtersystem 100 kann beispielsweise bei einem Kraftfahrzeug (nicht dargestellt) eingesetzt werden. Das Filtersystem 100 weist ein Filterelement **102** auf, das hier in einer Verpackung **104** bereitgestellt ist. Das Filterelement 102 umfasst ein Filtermedium **106** und zwei Endscheiben 108. Das Filterelement 102 ist hier beispielhaft als ein in radialer Richtung durchströmbares Rundfilterelement mit einem stermförmig gefalteten Filtermedium 106 dargstellt. Es versteht sich, dass im Rahmen der Erfindung beliebige Bauformen von Filterelementen verwendet werden können. Das Filterelement 102 weist ein Funkidentifikationsmittel **110** auf. Das Funkidentifikationsmittel 110 ist hier ein RFID-Tag (RFID-Chip). In dem Funkidentifikationsmittel 110 sind erste Daten zu dem Filterelement 102 gespeichert.

Die Verpackung 104 trägt ein weiteres Funkidentifikationsmittel 112. Das weitere Funkidentifikationsmittel 112 ist hier als ein auf die Verpackung 104 aufgeklebter RFID-Tag ausgebildet. In dem weiteren Funkidentifikationsmittel 112 sind zweite Daten zu dem Filterelement 102 gespeichert.

Das Filtersystem 100 umfasst ferner ein Filtergehäuse **114** mit einem Filtertopf **116** und einem Gehäusedeckel 118. An dem Filtertopf 116 und dem Gehäusedeckel 118 ist hier jeweils ein Strömungsein- bzw. auslass **120** für ein zu filterndes Fluid ausgebildet. Das Filtergehäuse weist ein Lesegerät **122** für das Funkidentifikationsmittel 110 des Filterelements 102 auf. Das Lesegerät 122 kann, wie dargestellt, am Filtertopf 116 oder alternativ am Gehäusedeckel 118 angeordnet sein. Das Lesegerät 122 umfasst hier eine Leseeinheit **124** sowie eine Auswerteeinheit **126** und eine Speichereinheit 128. Die Auswerteeinheit 126 und die Speichereinheit 128 können alternativ auch separat (unabhängig) von dem Lesegerät 122 ausgebildet sein, beispielsweise in einem Steuergerät eines Kraftfahrzeugs mit dem Filtersystem 100.

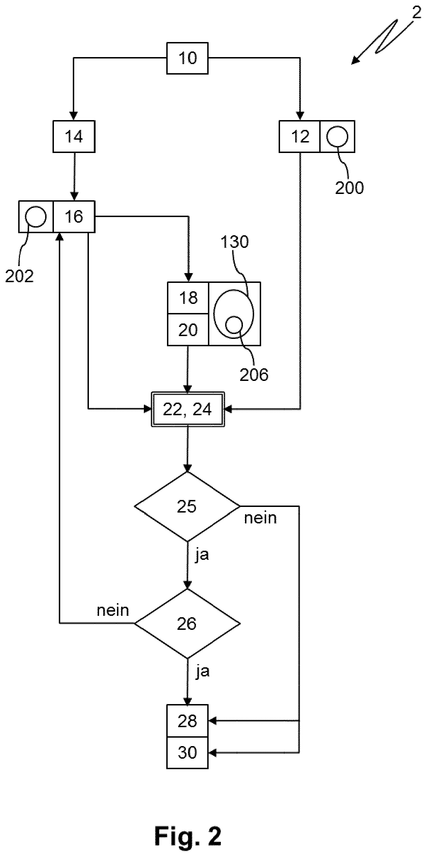

Das weitere Funkidentifikationsmittel 112 der Verpackung 104 kann mittels des Lesegeräts 122 ausgelesen werden. Dazu kann das weitere Funkidentifikationsmittel 112 an die Leseeinheit 124 angenähert werden, typischerweise nachdem das Filterelement 102 aus der Verpackung 104 entnommen wurde. Die von der Leseeinheit 124 erfassten ersten Daten der Verpackung 104 werden dann in der Speichereinheit 128 abgelegt (siehe auch Fig. 2).

**Fig. 1b** zeigt einen Fluidfilter **129** des Filtersystems 100, das von dem Filtergehäuse 114 mit dem darin eingesetzten Filterelement 102 gebildet ist. Das Filtersystem 100 umfasst hier ferner eine zentrale Datenbank **130,** in der dritte Daten über das Filterelement 102 gespeichert sind. Während des Betriebs des Filtersystems 100 erfasst das Lesegerät 122 mit seiner Leseeinheit 124 die zweiten Daten des Funkidentifikationsmittels 110 des Filterelements 102. Zudem kann das Lesegerät 122 über die Auswerteeinheit 126 die dritten Daten aus der zentralen Datenbank 130 abrufen. Die ersten Daten können von der Auswerteeinheit 126 mit den dritten Daten aus der Datenbank 130 und/oder mit in der Speichereinheit 128 abgelegten zweiten Daten verglichen werden. Das Lesegerät kann mit der Datenbank kabelgebunden oder aber drahtlos verbunden sein, um eine Datenübertragung zwischen dem Lesegerät und der Datenbank zu ermöglichen.

Unter zusätzlicher Bezugnahme auf **Fig.** 2 wird im Folgenden der Ablauf eines erfindungsgemäßen Betriebsverfahrens 2 für das Filtersystem 100 beschrieben.

Das Filterelement 102 wird in einem Schritt **10** in der Verpackung 104 bereitgestellt. Zunächst wird das Filterelement 102 aus der Verpackung 104 entnommen. Die Verpackung 104 ist mit den ersten Daten **200** über das Filterelement 102 versehen, z.B. der Nummer einer Produktionscharge. Die ersten Daten 200 werden in einem Schritt **12** in die Speichereinheit 128 des Filtersystems 100 eingelesen.

Das aus der Verpackung 104 entnommene Filterelement 102 wird in einem Schritt **14** in das Filtergehäuse 114 eingesetzt. Das Filterelement 102 ist mit dem Funkidentifikationsmittel 110 versehen, auf dem die zweiten Daten **202** über das Filterelement 102 gespeichert sind, z.B. eine Seriennummer. Nach dem Einsetzen 14 des Filterelements 102 in das Filtergehäuse 114 werden in einem Schritt **16** die zweiten Daten 202 von dem Lesegerät 122 des Filtergehäuses 114 ausgelesen.

Die zweiten Daten 202 können daraufhin in einem Schritt 18 an die zentrale Datenbank 130 übermittelt werden, beispielsweise um zentral zu registrieren, dass das vorliegende Filterelement 102 eingebaut wurde. Es können auch weitere Daten an die Datenbank 130 übermittelt werden, etwa das Kraftfahrzeugmodell, in dem das Filterelement 102 eingebaut worden ist. Aus der Datenbank 130 können in einem Schritt 20 die dritten Daten 206 zu dem Filterelement 102 abgerufen werden, beispielsweise eine maximal zulässige Betriebsdauer in dem Filtersystem 100 des betreffenden Kraftfahrzeugmodells.

Sodann werden in einem Schritt 22 die ersten und zweiten Daten 200, 202 in der Auswerteeinheit 126 des Filtersystems 100 verglichen. Der Vergleich 22 kann unter Berücksichtigung 24 der dritten Daten 206 vorgenommen werden. In einem Schritt 25 wird anhand eines Ergebnisses des Vergleichs 22 überprüft, ob die ersten und zweiten Daten 200, 202 in einer vorgebenen Weise übereinstimmen. Insbesondere können die dritten Daten 206 herangezogen werden, um die vorgegebene Weise für das Vorliegen der Übereinstimmung zu spezifizieren. Im Beispiel kann zunächst überprüft werden, ob das eingebaute Filterelement 102 aus der Produktionscharche stammt, die in den ersten Daten 200 der Verpackung 104 angegeben ist. Entsprechende Informationen können aus der im Funkidentifikationsmittel 110 im Rahmen der zweiten Daten 202 gespeicherten Seriennummer des Filterelements 102 entnommen werden. Weiterhin kann überprüft werden, ob ein durch die Seriennummer identifizierbarer Typ des Filterelements 102 in diesem Kraftfahrzeugmodell betrieben werden darf. Ferner kann überprüft werden, ob die Seriennummer des eingebauten Filterelements 102 nach wie vor mit der zuvor ausgelesen und in der Speichereinheit 128 des Filtersystems 100 oder der zentralen Datenbank 130 abgelegten Seriennummer übereinstimmt. Die Seriennummer des eingebauten Filterelements 102 kann auch mit einer zuvor von der Verpackung 104 eingelesenen 12 und in der Speichereinheit 128 gespeicherten Seriennummer verglichen werden.

Ergibt die Überprüfung 25 des Ergebnisses des Vergleichs 22, dass die ersten und zweiten Daten 200, 202 in der vorgegebenen Weise übereinstimmen, so kann in einem Schritt 26 noch überprüft werden, ob ein Verfallsdatum des Filterelements 102 überschritten ist. Das Verfallsdatum kann als ein absoluter Zeitpunkt in den ersten und/oder zweiten Daten 200, 202 enthalten sein. Das Verfallsdatum kann auch ausgehend von dem Zeitpunkt des Einbaus 14 des Filterelements 102 über eine maximal zulässige Betriebszeit bestimmt werden.

Wenn die ersten und zweiten Daten 200, 202 nach dem Ergebnis des Vergleichs 22 nicht in der vorgegebenen Weise übereinstimmen oder wenn das Verfallsdatum des Filterelements 102 überschritten ist, wird in einem Schritt **28** ein Warnhinweis ausgegeben und/oder in einem Schritt **30** wird ein weiterer Betrieb des Fluidfilters 129 verhindert. Ob die Ausgabe 28 eines Warnhinweises genügt, oder ob ein Verhindern 30 des Betriebs erfolgen muss, kann in Abhängigkeit von dem Ergebnis des Vergleichs 22 oder dem Ausmaß des in Schritt 26 festgestellten Überschreitens des Verfallsdatums bestimmt werden. So kann bei einer geringfügigen Überschreitung des Verfallsdatums, z.B. um einige Wochen, die Ausgabe 28 eines Warnhinweises genügen. Wird hingegen bei der Überprüfung 25 des Ergebnisses des Vergleichs 22 festgestellt, dass ein für das Filtersystem 100 ungeeignetes Filterelement eingebaut ist, etwa ein Filterelement eines falschen Typs oder ein nachgebautes Filterelement eines Fremdherstellers, so erfolgt ein Verhindern 30 des weiteren Betriebs des Filtersystems 100s.

Ist nach dem Ergebnis des Vergleichs 22 das richtige Filterelement 102 eingebaut und nach der Überprüfung 26 des Verfallsdatums noch verwendbar, so kann das Verfahren mit einem erneuten Auslesen 16 der zweiten Daten 202 von dem Funkidentifikationsmittel 110 fortgesetzt werden. Das erneute Auslesen 16 kann beispielsweise stattfinden, wenn das Kraftfahrzeug mit dem Fluidfilter 129 erneut in Betrieb gesetzt (angelassen) wird oder wenn das Filtergehäuse 114 geöffnet und geschlossen worden ist.

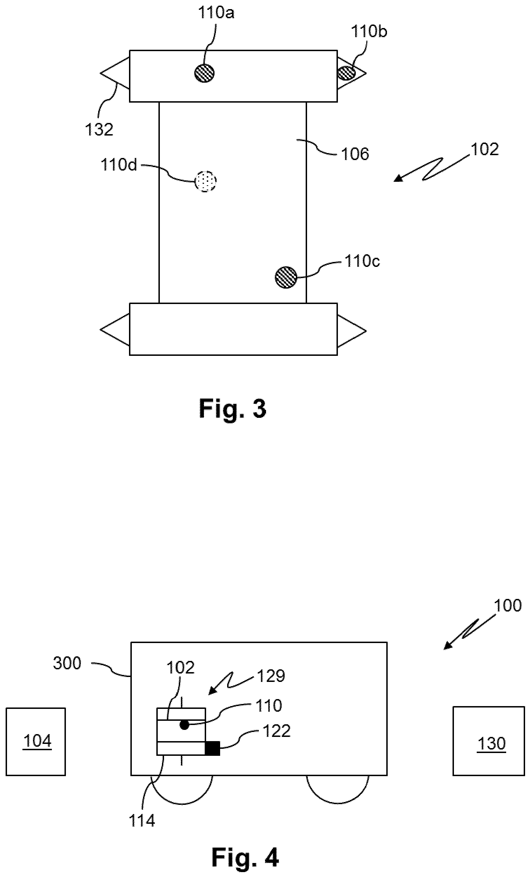

In **Fig.** 3 sind beispielhaft verschiedene Positionen dargestellt, an denen ein Funkidentifikationsmittel am Filterelement 102 angebracht sein kann. Ein erstes Funkidentifikationsmittel 110a ist hier in eine Endscheibe 108 des Filterelements 102 eingebettet (eingegossen). Ein zweites Funkidentifikationsmittel 110b kann in ein Dichtungselement 132 integriert (z.B. eingespritzt) sein. Das Dichtungselement ist an der Endscheibe 108 zur Abdichtung gegen ein Filtergehäuse angeordnet. Ein drittes Funkidentifikationsmittel 110c ist außenseitig auf einem Filtermedium 106 des Filterelements 102 angeordnet, beispielsweise aufgeklebt. Ein viertes Funkidentifikationsmittel 110d ist innerhalb des Filtermediums 106 vorgesehen. Es versteht sich, dass tpyischerweise nur eines der Funkidentifikationsmittel 110a-d an dem Filterelement angeordnet ist, obschon in Sonderfällen auch mehrere Funkidentifikationsmittel 110a-d gleichzeitig vorhanden sein können.

**Fig.** 4 zeigt ein erfindungsgemäßes Filtersystem 100 mit einem Fluidfilter 129, der in einem Kraftfahrzeug 300 eingebaut ist. Der Fluidfilter 129 weist ein Filterelement 102 mit einem Funkidentifikationsmittel 110 sowie ein Filtergehäuse 114 mit einem Lesegerät 122 für das Funkidentifikationsmittel 110 auf. Eine Verpackung 104, in der das Filterelement 102 bereitgestellt wurde, ist nach dem Einbau des Filterelementes 102 in das Filtergehäuse 114 des Kraftfahrzeugs 300 beiseitegelegt worden. Das Filtersystem kann ferner eine zentrale Datenbank 130 umfassen.

## Patentansprüche

1. Betriebsverfahren (2) für ein Filtersystem (100), insbesondere eines Kraftfahrzeugs (300),
wobei das Filtersystem (100) folgendes umfasst:
- ein Filterelement (102) für einen Fluidfilter (129), wobei das Filterelement (102) in einer Verpackung (104) mit ersten Daten (200) über das Filterelement (102) bereitgestellt ist (10), und wobei das Filterelement (102) ein Funkidentifikationsmittel (110; 110a-110d) mit zweiten Daten (202) über das Filterelement (102) aufweist,
- ein Filtergehäuse (114) des Fluidfilters (129), in dem das Filterelement (102) austauschbar anordenbar ist, und das ein Lesegerät (122) für das Funkidentifikationsmittel (110; 110a-110d) aufweist,
- eine Auswerteeinheit (126) sowie eine Speichereinheit (128),
mit den Schritten:
a) Einsetzen (14) des Filterelements (102) in das Filtergehäuse (114) und Einlesen (12) der ersten Daten (200) von der Verpackung (104) des Filterelements (102) in die Speichereinheit (128),
b) Auslesen (16) der zweiten Daten (202) des Funkidentifikationsmittels (110; 110a-110d) mit dem Lesegerät (122),
c) Vergleichen (22) der ersten und zweiten Daten (200, 202) in der Auswerteeinheit (126), und Ausgeben (28) eines Warnhinweises und/oder Verhindern (30) eines Betriebs des Fluidfilters (129), wenn der Vergleich (22) ergeben hat, dass die zweiten Daten (202) des Funkidentifikationsmittels (110; 110a-110d) und die ersten Daten (200) von der Verpackung (104) nicht in einer vorgegebenen Weise übereinstimmen.

2. Betriebsverfahren (2) nach Anspruch 1, **dadurch gekennzeichnet, dass** die Schritte b) und c) nach einem Starten, bevorzugt jedes Mal nach dem Starten, eines Kraftfahrzeugs mit dem Filtersystem (100) durchgeführt werden.

3. Betriebsverfahren (2) nach einem der vorhergehenden Ansprüche, **dadurch gekennzeichnet, dass** die Schritte b) und c) jedes Mal durchgeführt werden, wenn das Filtergehäuse (114) geöffnet und geschlossen wurde.

4. Betriebsverfahren (2) nach einem der vorhergehenden Ansprüche, **dadurch gekennzeichnet, dass** in Schritt c) auch überprüft wird, ob ein Verfallsdatum des Filterelements (102) überschritten ist (26).

5. Betriebsverfahren (2) nach einem der vorhergehenden Ansprüche, **dadurch gekennzeichnet, dass** das Filtersystem (100) eine zentrale Datenbank (130) umfasst, und dass in dem Schritt b) weiterhin dritte Daten (206) über das Filterelement (102) aus der zentralen Datenbank (130) abgerufen werden (20) und/oder die zweiten Daten (202) an die zentrale Datenbank (130) übermittelt werden (18).

6. Betriebsverfahren (2) nach einem der vorhergehenden Ansprüche, **dadurch gekennzeichnet, dass** das Funkidentifikationsmittel (110; 110a-110d) ein RFID-Tag ist.

7. Betriebsverfahren (2) nach einem der Ansprüche 1 bis 6, **dadurch gekennzeichnet, dass** das Funkidentifikationsmittel (110; 110c, 110d) an oder in einem Filtermedium (106) des Filterelements (102), insbesondere innerhalb des Filtermediums (106), angeordnet ist.

8. Betriebsverfahren (2) nach einem der Ansprüche 1 bis 6, **dadurch gekennzeichnet, dass** das Funkidentifikationsmittel (110a, 110b) an oder in einer Endscheibe (108) des Filterelements (102) oder einem Dichtungselement (132) des Filterelements (102) angeordnet ist.

9. Betriebsverfahren (2) nach einem der Ansprüche 1 bis 8, **dadurch gekennzeichnet, dass** die Auswerteeinheit (126) und/oder die Speichereinheit (128) in dem Lesegerät (122) ausgebildet sind.

10. Betriebsverfahren (2) nach einem der Ansprüche 1 bis 8, **dadurch gekennzeichnet, dass** die Auswerteeinheit (126) und/oder die Speichereinheit (128) in einem Steuergerät eines Kraftfahrzeugs (300) mit dem Fluidfilter (129) des Filtersystems (100) ausgebildet sind.

11. Betriebsverfahren (2) nach einem der vorhergehenden Ansprüche, **dadurch gekennzeichnet, dass** die ersten Daten (200) der Verpackung (104) des Filterelements (102) in einem weiteren Funkidentifikationsmittel (112), insbesondere einem weiteren RFID-Tag, einem Barcode oder einem Smartcode hinterlegt sind.

## Claims

1. Operating method (2) for a filter system (100, in particular of a motor vehicle (300),
wherein the filter system (100) comprises the following:
- a filter element (102) for a fluid filter (129), wherein the filter element (102) is made available (10) in a package (104) with first data (200) about the filter element (102), and wherein the filter element (102) features a radio-frequency identification means (110; 110a-110d) with second data (202) about the filter element (102),
- a filter housing (114) of the fluid filter (129), in which the filter element (102) can be replaceably disposed, and which features a reading device (122) for the radio-frequency identification means (110; 110a-110d),
- an evaluation unit (126) as well as a memory unit (128),
with the steps:
a) Inserting (14) the filter element (102) into the filter housing (114) and reading in (12) the first data (200) from the package (104) of the filter element (102) into the memory unit (128),
b) Reading out (16) the second data (202) of the radio-frequency identification means (110; 110a-110d) with the reading device (122),
c) Comparing (22) the first and second data (200, 202) in the evaluation unit (126), and issuing (28) a warning and/or preventing (30) an operation of the fluid filter (129) if the comparison (22) has shown that the second data (202) of the radio-frequency identification means (110; 110a-110d) and the first data (200) of the package (104) do not match as predetermined.

2. Operating method (2) according to claim 1, **characterized in that** the steps b) and c) are performed after a start, preferably each time after the start, of a motor vehicle with the filter system (100).

3. Operating method (2) according to one of the preceding claims, **characterized in that** the steps b) and c) are performed each time when the filter housing (114) has been opened and closed.

4. Operating method (2) according to one of the preceding claims, **characterized in that** in step c) it is also checked whether an expiration date of the filter element (102) is exceeded (26).

5. Operating method (2) according to one of the preceding claims, **characterized in that** the filter system (100) comprises a central database (130), and **in that** in step b) still third data (206) about the filter element (102) are retrieved (20) from the central database (130) and/or the second data (202) are transmitted (18) to the central database (130).

6. Operating method (2) according to one of the preceding claims, **characterized in that** the radio-frequency identification means (110; 110a-110d) is an RFID tag.

7. Operating method (2) according to one of the claims 1 to 6, **characterized in that** the radio-frequency identification means (110; 110a-110d) is disposed on or in a filter medium (106) of the filter element (102), in particular inside the filter medium (106).

8. Operating method (2) according to one of the claims 1 to 6, **characterized in that** the radio-frequency identification means (110a, 110b) is disposed on or in an end disc (108) of the filter element (102) or a sealing element (132) of the filter element (102).

9. Operating method (2) according to one of the claims 1 to 8, **characterized in that** the evaluation unit (126) and/or the memory unit (128) are implemented in the reading device (122).

10. Operating method (2) according to one of the claims 1 to 8, **characterized in that** the evaluation unit (126) and/or the memory unit (128) are implemented in a control device of a motor vehicle (300) with the fluid filter (129) of the filter system (100).

11. Operating method (2) according to one of the preceding claims, **characterized in that** the first data (200) of the package (104) of the filter element (102) are stored in a further radio-frequency identification means (112), in particular a further RFID tag, a barcode or a smartcode.

## Revendications

1. Méthode d'exploitation (2) pour un système de filtre (100), notamment d'un véhicule automobile (300),
le système de filtre (100) comprenant ce qui suit :
- un élément filtrant (102) pour un filtre à fluide (129), l'élément filtrant (102) étant mis à disposition (10) dans un emballage (104) avec des premières données (200) au sujet de l'élément filtrant (102), et l'élément filtrant (102) présentant un moyen d'identification par fréquence radio (110; 110a-110d) avec des deuxièmes données (202) au sujet de l'élément filtrant (102),
- un boîtier de filtre (114) du filtre à fluide (129) dans lequel l'élément filtrant (102) peut être disposé de manière échangeable, et qui présente un lecteur (122) pour le moyen d'identification par fréquence radio (110 ; 110a-110d),
- une unité d'évaluation (126) ainsi qu'une mémoire (128),
avec les étapes :
a) Introduire (14) l'élément filtrant (102) dans le boîtier de filtre (114) et lire (12) les premières données (200) de l'emballage (104) de l'élément filtrant (102) dans la mémoire (128),
b) Extraire (16) les deuxièmes données (202) du moyen d'identification par fréquence radio (110 ; 110a-110d) à l'aide du lecteur (122),
c) Comparer (22) les premières et deuxièmes données (200, 202) dans l'unité d'évaluation (126), et émettre (28) un avertissement et/ou empêcher (30) l'opération du filtre à fluide (129) si la comparaison (22) a révélé que les deuxièmes données (202) du moyen d'identification par fréquence radio (110 ; 110a-110d) et les premières données (200) de l'emballage (104) ne coïncident pas comme prévues.

2. Méthode d'exploitation (2) selon la revendication 1, **caractérisée en ce que** les étapes b) et c) sont exécutées après un démarrage, de préférence chaque fois après le démarrage, d'un véhicule automobile avec le système de filtre (100).

3. Méthode d'exploitation (2) selon l'une des revendications précédentes, **caractérisée en ce que** les étapes b) et c) sont exécutées chaque fois que le boîtier de filtre (114) a été ouvert et fermé.

4. Méthode d'exploitation (2) selon l'une des revendications précédentes, **caractérisée en ce que** lors de l'étape c) on vérifie également si une date de péremption de l'élément filtrant (102) est échue (26).

5. Méthode d'exploitation (2) selon l'une des revendications précédentes, **caractérisée en ce que** le système de filtre (100) comprend une base de données centrale (130), et **en ce que** dans l'étape b) d'autres troisièmes données (206) concernant l'élément de filtre (102) sont extraites (20) de la base de données centrale (130) et/ou les deuxièmes données (202) sont transmises (18) à la base de données centrale (130).

6. Méthode d'exploitation (2) selon l'une des revendications précédentes, **caractérisée en ce que** le moyen d'identification par fréquence radio (110 ; 110a-110d) est une étiquette RFID.

7. Méthode d'exploitation (2) selon l'une des revendications 1 à 6, **caractérisée en ce que** le moyen d'identification par fréquence radio (110 ; 110c, 110d) est disposé sur ou dans un milieu filtrant (106) de l'élément filtrant (102), notamment à l'intérieur du milieu filtrant (106).

8. Méthode d'exploitation (2) selon l'une des revendications 1 à 6, **caractérisée en ce que** le moyen d'identification par fréquence radio (110a, 110b) est disposé sur ou dans un disque d'extrémité (108) de l'élément filtrant (102) ou un élément d'étanchéité (132) de l'élément filtrant (102).

9. Méthode d'exploitation (2) selon l'une des revendications 1 à 8, **caractérisée en ce que** l'unité d'évaluation (126) et/ou la mémoire (128) sont réalisées dans le lecteur (122).

10. Méthode d'exploitation (2) selon l'une des revendications 1 à 8, **caractérisée en ce que** l'unité d'évaluation (126) et/ou la mémoire (128) sont réalisées dans une unité de commande d'un véhicule automobile (300) avec un filtre à fluide (129) du système de filtre (100).

11. Méthode d'exploitation (2) selon l'une des revendications précédentes, **caractérisée en ce que** les premières données (200) de l'emballage (104) de l'élément filtrant (102) sont enregistrées dans un autre moyen d'identification par fréquence radio (112), notamment une autre étiquette RFID, un code à barres ou un code intelligent.
